# EUROPEAN PATENT APPLICATION

(11) **EP 1 892 916 A1**
(43) Date of publication of application: **27.02.2008**
(21) Application number: 06110275.2
(22) Date of filing: 22.02.2006
(51) Int. Cl.: H04L 29/06, G10L 19/14

(54) **Method for signal transmission, transmitting apparatus and communication system**

(71) Applicant: BenQ Mobile GmbH & Co. oHG, 81667 München (DE)
(72) Inventor: Praestholm, Steffen, 9000 Aalborg (DK)
(74) Representative: von Samson-Himmelstjerna, Friedrich

(57) **Abstract**

The invention relates to a method for signal transmission comprising the steps of providing a source signal (401, 501, 601) comprising at least a first source signal part (404A, 504A, 604B), generating a target signal (402, 502, 602) in dependence on the source signal (401, 501, 601), the target signal (402, 502, 602) comprising a first target signal part (405A, 505A, 605B) corresponding to the first source signal part (404A, 504A, 604B), the first target signal part (405A, 505A, 604B) being scaled with respect to the first source signal part (404A, 504A, 604B) in the time domain, providing a communication link (119), and transmitting the target signal (402, 502, 602) comprising the first target signal part (405A, 505A, 605B) over the communication link (119).

The invention further relates to a transmitting apparatus (101) and a communication system (100) adapted to perform the inventive method.

## Description

The invention relates to a method for signal transmission comprising the steps of providing a source signal, generating a target signal, providing a communication link and transmitting the target signal. The invention also relates to a transmitting apparatus and a communication system adapted to perform the inventive method.

In signal transmission in general and in telephony in particular delays caused by initialization and failures of the underling communication link are disturbing. For example, when talking over a Voice over Internet Protocol (VoIP) communication link, an initial delay required to initialize the communication link and an encoder used to encode a speech spurt is incurred. Especially in relatively slow networks or in networks with a high latency, for example in mobile communication networks, such delays are often bigger than the inherent delay caused by the transmission of the signal.

As a result a speaker has to wait longer before he or she is answered by a listener. This often leads to confusion on either side, in particular in telephony, causing the speaker or listener to repeat themselves as they assume their transmission was lost. Further problems in communication can arise, if parts of a signal are lost or transmitted too late to a listener.

Document WO 01/48736 A1 discloses a systems for transmission of sound over packet switched networks. According to the invention, the lengths of received signal frames are manipulated by performing time expansion or time compression so as to maintain a continuous flow of signal samples to be played back.

It is an object of the present invention to describe an improved method for a signal transmission. It is a further object of the invention to describe a transmitting apparatus and a communication system adapted for improved signal transmission.

According to a first aspect of the invention, a method for signal transmission is disclosed. The method comprises the steps of
- providing a source signal comprising at least a first source signal part,
- generating a target signal in dependence on the source signal, the target signal comprising a first target signal part corresponding to the first source signal part, the first target signal part being scaled with respect to the first source signal part in the time domain,
- providing a communication link, and
- transmitting the target signal comprising the first target signal part over the communication link.

By scaling a first target signal part comprised in a target signal with respect to a first source signal part comprised in a source signal, the target signal can be adapted to the properties of a communication link for transmission.

In an advantageous embodiment the source signal and the target signal each comprise digital audio signals, in particular speech spurts, such that the method can be used in telephony.

According to a further advantageous embodiment, the step of generating the target signal comprises making shorter the first target signal part with respect to the first source signal part. By making shorter the first target signal part, delays occurring in the transmission can be compensated for.

According to a further advantageous embodiment, the method further comprises the steps of initializing the communication link, providing a delay time and performing the step of making shorter the first target signal part such that the target signal is shorter than the source signal by approximately the provided delay time. By making shorter the first target signal part, the delay incurred during initialization of the communication link can be compensated.

According to a further advantageous embodiment, the step of generating the target signal comprises making longer the first target signal part with respect to the first source signal part. By making longer the first target signal part, gaps occurring in the transmission can be closed.

According to a further advantageous embodiment, the method further comprises the steps of receiving a notification of a delay spike and performing the step of making longer the first target signal part such that the target signal is longer than the source signal by approximately the provided delay spike. By making longer the first target signal part, the delay spike incurred, for example, during a handover can be removed.

According to a further advantageous embodiment, the source signal further comprises a second source signal part and the method further comprises the steps of providing a transmission probability for a successful transmission of a second target signal part comprised in the target signal and performing the step of generating a target signal such that the second target signal part corresponds to the second source signal part, if the provided probability is below a predefined threshold. By generating the target signal in the above said manner, the second source signal part can be mapped to the second target signal part, which is likely to be lost in transmission.

According to a further advantageous embodiment, the step of providing the transmission probability comprises computing a channel model for the communication link, wherein the channel model is used to determine the probability of successful transmission. By computing a channel model for the communication link, the transmission probability of target signal parts can be provided.

According to a further advantageous embodiment, the step of generating a target signal comprises making longer the second target signal part with respect to the second source signal part and making shorter the first target signal part with respect to the first source signal part. By making shorter the first target signal part and making longer the second target signal part, the information density of the second target signal part is reduced such that, in the case of an unsuccessful transmission of the second target signal part, less information is lost.

According to a further advantageous embodiment, the method further comprises the steps of simulating a receiver signal received in case transmission of the second target signal fails and performing the step of generating a target signal such that an information content of the target signal and the simulated receiver signal differ only insignificantly, in particular that a play-out quality of a speech spurt comprised in the target signal is optimized for a human listener, when the receiver signal is played back. By simulating a disturbed receiver signal and comparing it to an undisturbed target signal, the generated target signal can be optimized for both cases.

According to a further advantageous embodiment, the method further comprises the steps of omitting the transmission of the second target signal part if the provided probability is below a predefined threshold. By omitting the transmission of the second target signal part, the uncertainty of whether or not a second target signal part is transmitted successfully can be removed such that stateful decoders remain in a predictable state.

According to a further advantageous embodiment, the method further comprises the step of determining a periodic component comprised in the first source signal part and performing the step of generating the target signal comprises one of repeating, removing, shortening or lengthening of the determined periodic component in order to scale the first target signal part with respect to the first source signal part in the time domain. By determining periodic components of the first source signal part, the first target signal part can be scaled easily in the time domain.

According to a further advantageous embodiment, the step of generating the target signal comprises performing one of the following algorithms: silence compression, SOLA, PSOLA or WSOLA. By performing one of these algorithms, the first target signal part can be scaled in the time domain with minimal loss of quality as perceived by a human listener.

According to a further advantageous embodiment, in the step of generating the target signal a scaling parameter is adjusted during generation of the target signal. By adjusting a scaling parameter, the target signal generation can be adapted to new or changed information about the communication link or the source signal.

According to a second aspect of the present invention, a transmitting apparatus for use in a communication network is described. The transmitting apparatus comprises
- a signal input adapted to provide a source signal comprising at least a first source signal part,
- a scaling means adapted to generate a target signal in dependence on the source signal, the target signal comprising a first target signal part corresponding to the first source signal part, the first target signal part being made shorter or longer with respect to the first source signal part in the time domain,
- a signal encoder adapted to encode the target signal comprising the first target signal part in a sequence of data frames, and
- a transmitter adapted to initialize a communication link to the communication network and to transmit the sequence of the data frames comprising the encoded target signal using the communication link.

A transmitting apparatus of the above stated constitution is capable of performing a method in accordance with the first aspect of the present invention.

According to a third aspect of the present invention a communication system is disclosed, comprising
- a transmitting apparatus according to the second aspect of the present invention,
- a receiving apparatus adapted to receive a sequence of data frames, the receiving apparatus comprising a decoder adapted to decoder a receiver signal comprised in the sequence of data frames, and
- a communication network, adapted to connect the transmitting apparatus with the receiving apparatus by means of a communication link,
wherein the communication system is adapted to perform a method according to the first aspect of the invention.

According to an advantageous embodiment of the third aspect, the communication network is a digital mobile phone communication network, in particular a GSM (Groupe Spéciale Mobile) or UMTS (Universal Mobile Telecommunications System) network. By using a mobile phone communication network for providing the communication link, a method in accordance with an embodiment of the invention can be used in mobile communication.

According to a further advantageous embodiment of the third aspect, the communication network is a packet switching network, in particular a Voice over Internet Protocol (VoIP) network. By using a packet switching network for providing the communication link, a method in accordance with an embodiment of the present invention can be used on the Internet and other data networks.

Further details and embodiments of the present invention are disclosed in the patent claims.

In the following, the invention is further described using presently preferred, but nonetheless illustrative embodiments using the following figures:
Figure 1 shows a schematic diagram of a communication system in accordance with an embodiment of the present invention.
Figure 2 shows a schematic diagram of a mobile telephone in accordance with an embodiment of the present invention.
Figure 3A shows a timing diagram of a two-party signal transmission process illustrating the need to remove delays incurred by the initialization of a communication link.
Figure 3B shows a timing diagram of an improved two-party signal transmission process in accordance with an embodiment of the invention.
Figure 4 shows a first source signal, a first target signal and a first receiver signal in accordance with an embodiment of the present invention.
Figure 5 shows a second source signal, a second target signal and a second receiver signal in accordance with a further embodiment of the present invention.
Figure 6 shows a third source signal, a third target signal and a third receiver signal in accordance with a further embodiment of the present invention.

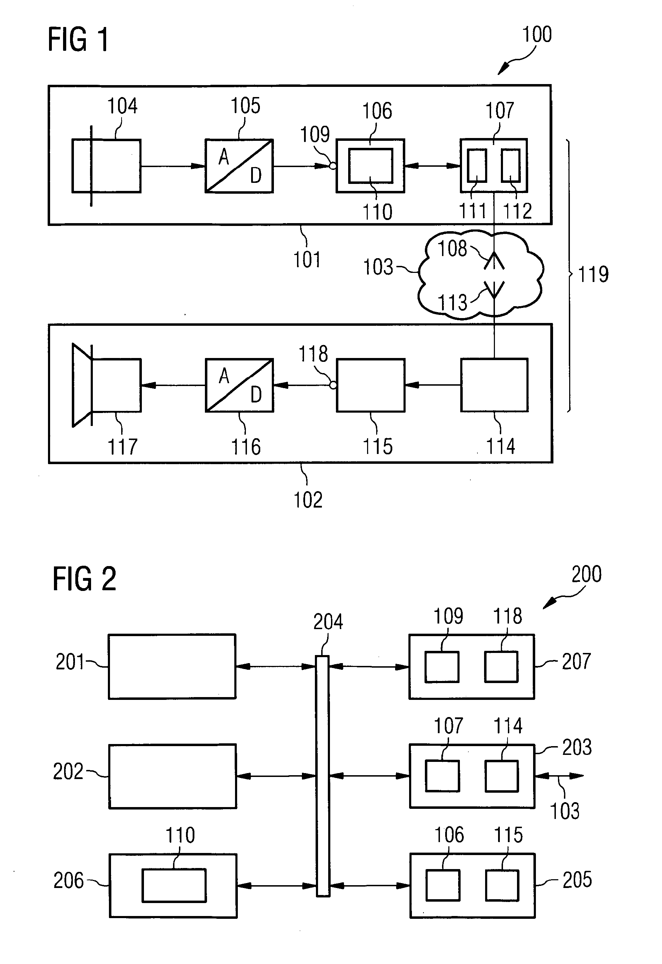

Figure 1 shows a schematic diagram of a communication system 100 in accordance with an embodiment of the present invention. The communication system 100 comprises a transmitting apparatus 101 and a receiving apparatus 102. The transmitting apparatus 101 and the receiving apparatus 102 are connected by a communication network 103.

The transmitting apparatus 101 comprises a microphone 104, an analog-to-digital converter 105, a signal encoder 106, a transmitter 107 and a transmitter antenna 108. The analog-to-digital converter 105 digitizes a signal acquired by the microphone 104 and provides it to a signal input 109 of the signal encoder 106 for encoding. The signal encoder 106 comprises a scaling means 110 adapted to scale a part of the signal received from the signal input 109. Depending on the type of signal encoder 106, the scaling may be performed before, during or after the encoding of the signal received from the signal input 109. The Scaling means 110 may comprise hard- or software adapted to generate or regenerate digitized signals, or even control circuitry adapted, for example, to increase or reduce a sampling frequency used by the analog-to-digital converter 105.

The signal encoder 106 is operationally connected to the transmitter 107 such that a target signal generated by the signal encoder 106 can be modulated and transmitted by the transmitter 107 using the transmitter antenna 108. The transmitter 107 comprises a timing means 111 adapted to provide a delay time required for an initialization of a communication link 119 to the communication network 103. The transmitter 107 further comprises a prediction means 112 adapted to provide a transmission probability for a successful transmission of a target signal part comprised in the target signal to be transmitted over the communication link 119.

The receiving apparatus 102 comprises a receiver antenna 113, a receiver 114, a signal decoder 115, a digital-to-analog converter 116 and a loudspeaker 117. The receiver 114 is adapted to pick up and demodulate a signal received by the receiver antenna 113 and provide it to the signal decoder 115 for decoding. The signal decoder 115 provides a decoded receiver signal to an signal output 118, which is further connected to the digital-to-analog converter 116 and converted it by into an analog receiver signal to be played back by the loudspeaker 117.

In the embodiment presented in Figure 1, the communication link 119 between the signal encoder 106 and the signal decoder 115 is formed by an arrangement comprising the transmitter 107, the transmitter antenna 108, the communication network 103, the receiver antenna 113 and the receiver 114. However, other embodiments, like telephony systems for VoIP communication, may use different means to form the communication link 119. These include all data networks, computer hardware, software modules and network protocols adapted to establish the communication link 119 between the transmitting apparatus 101 and the receiving apparatus 102.

Moreover, the communication link 119 does not need to form an end-to-end link between the transmitting apparatus 101 and the receiving apparatus 102. Instead, the communication link 119 may be a partial communication link, for example between the transmitting apparatus 101 and a base station of a mobile communication network 103 or between a first and a second exchange of a telephone network.

As can be seen from Figure 1, the transmitting apparatus 101 and the receiving apparatus 102 have a similar constitution and may be, in practice, devices of the same type. In this case, a true two-way communication may take place between the transmitting apparatus 101 and the receiving apparatus 102, wherein the roles of the transmitting apparatus 101 and the receiving apparatus 102 can by swapped. In particular, a mobile telephone adapted to work with a digital communication network 103 may comprise the functional units required for the transmitting apparatus 101 and the receiving apparatus 102 in one and the same device. In this and other cases, functional units shown as independent parts in Figure 1 may be implemented by a single physical part. For example, the transmitter antenna 108 and the receiving antenna 113 may be implemented as a single antenna.

Figure 2 shows a schematic diagram of a mobile telephone 200 in accordance with an embodiment of the present invention. The mobile telephone 200 comprises a processor 201, for example a microprocessor or microcontroller, a memory unit 202, for example a volatile random access memory or a non-volatile flash memory, a signal processor 206 running, for example, a PSOLA algorithm and serving as scaling means 110, a codec 205 comprising a signal encoder 106 and a signal decoder 115, for example a further signal processor adapted to implement an adaptive multirate codec (AMR) algorithm, and a transceiver 203 comprising a transmitter 107 and a receiver 114 for transmitting and receiving data to a communication network 103. The mobile telephone 200 further comprises an input/output system 207 comprising a data input 109 and a data output 118 for providing signals to and from the mobile telephone 200. All functional components of the mobile telephone 200 are connected by a data bus 204. The mobile telephone 200 is adapted to be used in a digital mobile communication network 103, for example a GSM or UMTS network.

Although, in the exemplary embodiment shown in Figure 2, the processor 201, signal processor 206 and the codec 205 are shown as separate units, these and other functional units may be implemented in a single physical device. Some of these functional units may be implemented in part or in total using software algorithms running on a processing device and may form parts of a network protocol stack.

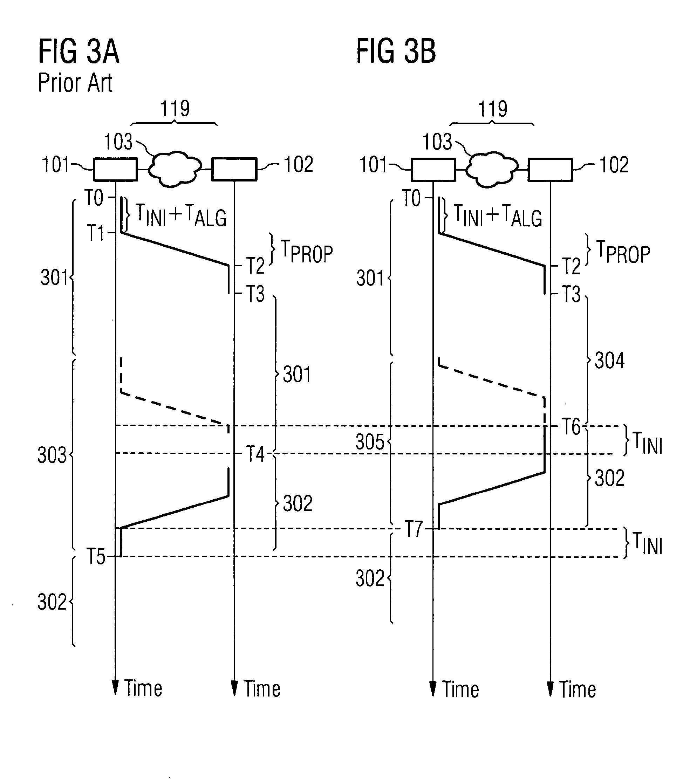

Figure 3A shows a timing diagram for a telephone conversation according to the prior art. The telephone conversation comprises the exchange of a first speech spurt 301 from a transmitting apparatus 101 to a receiving apparatus 102 followed by the transmission of a second speech spurt 302 from the receiving apparatus 102 to the transmitting apparatus 101 in response.

At time T0, a speaker starts speaking the first speech spurt 301. At this time T0, the transmitting apparatus 101 starts buffering the speech spurt 301 and also starts to initialize a communication link 119 to the receiving apparatus 102. Due to network latency of the communication network 103 used for communication and other initialization steps a delay time T_{INI} passes, before transmission can start. A further delay, the algorithmic delay T_{ALG}, may be caused by the encoder 106 itself for buffering speech samples for encoding and processing of these samples.

At time T1 transmission starts and, after a signal propagation time T_{PROP} caused by the signal transmission itself, at time T2, the receiving apparatus 102 starts receiving the first speech spurt 301. A further delay is incurred by an decoding algorithm running at the receiving apparatus 102, before, at time T3, the receiving equipment 102 starts playing back the first speech spurt 301.

After the playback of the first speech spurt 301 is completed at time T4, a human listener listening to the first speech spurt 301 can respond by transmitting a second speech spurt 302 from the receiving apparatus 102 back to the transmitting apparatus 101. Similar delays as described above are also incurred during the transmission of the second speech spurt 302.

Consequently, a human listener at the transmitting apparatus 101 has to wait for a wait period 303 until time T5, at which playback of the second speech spurt 302 starts. The wait period 303 comprises the accumulated delay time T_{INI} for initializing the communication link 119, the algorithmic delay T_{ALG} of the transmitting apparatus 101 and the receiving apparatus 102 and two times the signal propagation time T_{PROP} required for signal transmission from the transmitting apparatus 101 to the receiving apparatus 102.

If the wait period 303 becomes very long, a human speaker using the transmitting apparatus 101 may become uncertain as to whether his first speech spurt 301 was transmitted successfully to the receiving apparatus 102 and, therefore, may repeat the first speech spurt 301 before the second speech spurt 302 comprising the response is received by the transmitting apparatus 101. This in turn may lead to further confusion on both sides as the repetition of the first speech spurt 301 is likely to collide with the second speech spurt 302 spoken in response to the first speech spurt 301.

Figure 3B shows a timing diagram for a signal transmission in accordance with an embodiment of the present invention. Again a human speaker at the transmitting apparatus 101 starts speaking a first speech spurt 301 at a time T0. After an initial delay time T_{INI} and the algorithmic delay T_{ALG} the transmitting apparatus 101 starts transmitting at time T2. However, instead of transmitting the first speech spurt 301, a shortened first speech spurt 304 is transmitted to the receiving apparatus 102. As before, the receiving apparatus 102 starts receiving the shortened speech spurt 304 at time T2 and starts playing back the shortened speech spurt 304 at time T3.

In the presented example, the shortened speech spurt 304 is shortened in the time domain by the amount of delay time T_{INI} incurred during setting up the communication link 119. Consequently, the playback of the shortened first speech spurt 304 ends at a time T6 earlier than time T4 at which the playback of the original speech spurt 301 of Figure 3A ends. As a consequence, the human listener at the receiving apparatus 102 can start responding by transmitting the second speech spurt 302 earlier. Thus, the second speech spurt 302 is played back to a listener at the transmitting apparatus 101 at a time T7 earlier than time T5 shown in Figure 3A.

According to the timing diagram shown in Figure 3B, a speaker at the transmitting apparatus 101 has to wait for a reduced wait period 305, which is shorter than the wait period 303 according to the prior art shown in Figure 3A. As a consequence, the uncertainty of the communication parties can be reduced, improving the quality of service.

In Figure 3B, only the first delay time T_{INI} incurred due to the initialization of the communication link 119 and signal encoder 106 is compensated for, for example by estimating the amount of data already buffered since time T0. However, as will be obvious to a person skilled in the art, other delay times incurred during the signal transmission, for example an initial delay incurred by the receiving apparatus 102 may be compensated for in a similar fashion, if the corresponding delay time is known to the transmitting apparatus 101 at the time of transmitting. Depending on the underlying technology used for the communication link 119, such information may be provided via or determined from the use of service protocols such as the Real Time Transport Protocol (RTP) or the Real Time Control Protocol (RTCP). However, the algorithmic delay T_{ALG} intrinsic to some encoding algorithms and the signal propagation time T_{PROP} as experienced by the last packets in a speech spurt can not be compensated for.

According to Figure 3B only the first speech spurt 301 is shortened. However, if the receiving apparatus 102 is adapted in a similar way as the transmitting apparatus 101 to employ a method in accordance with an embodiment of the invention, the second speech spurt 302 may be shortened in a similar fashion, leading to a further reduction of the reduced wait period 305.

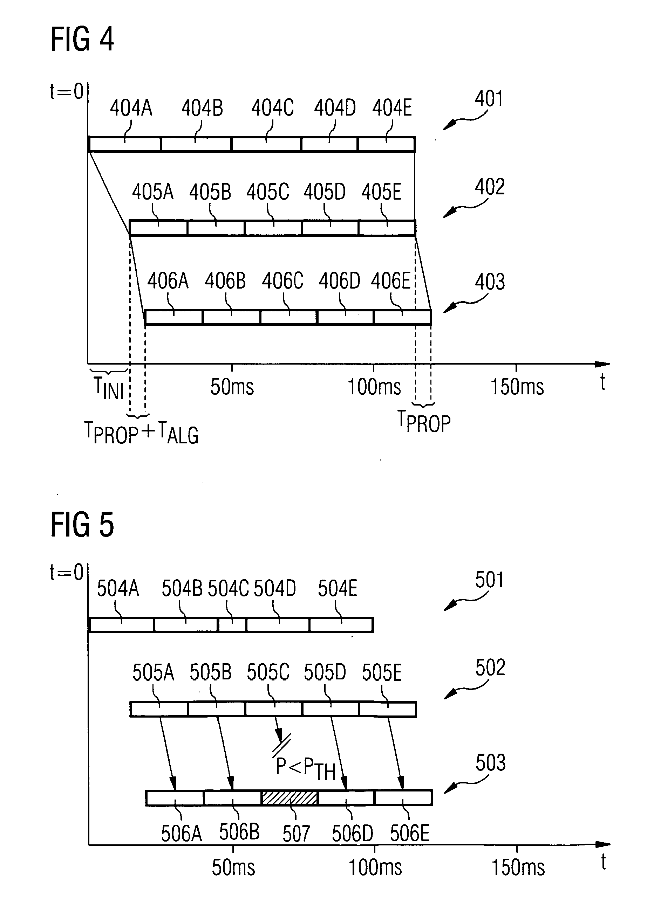

Figure 4 shows a first source signal 401, a first target signal 402 and a first receiver signal 403 in accordance with an embodiment of the invention. The processing, transmission and reception of the first source signal 401, the first target signal 402 and the first receiver signal 403 is described in terms of the communication system 100 presented in Figure 1. However, other arrangements may be used in order to accomplish similar results.

The first source signal 401 is comprised of five source signal parts 404A to 404E. A source signal part 404 may comprise, for example, a group of samples to be sent to the signal encoder 106 for encoding.

After the initial delay time T_{INI}, for example 15 milliseconds after the start of the first source signal 401, the signal encoder 106 starts outputting data packets comprising target signal parts 405A to 405E for transmission by the transmitter 107. In the example presented in Figure 4, each source signal part 404 is encoded in a corresponding target signal part 405. In general, however, many source signal parts 404 may be encoded in a single target signal part 405 and vice versa.

In order to compensate the initial delay time T_{INI}, the target signal parts 405A, 405B and 405C are shortened in the time domain with respect to the corresponding source signal parts 404A, 404B and 404C respectively. The remaining target signal parts 405D and 405E have the same lengths in the time domain as the corresponding source signal parts 404D and 404E.

For example, the target signal parts 405 may be audio frames to be transmitted over a GSM or UMTS network 103 and have a length of 20 milliseconds, each comprising 160 audio samples. In contrast each of the source signal parts 404A to 404C may comprise 200 audio samples received from the analog-to-digital converter 105 corresponding to a signal length of 25 milliseconds. Thus, the first source signal 401 may comprise a speech spurt with a length of 115 milliseconds, which may be encoded in the first target signal 402 representing a shortened speech spurt having a reduced length of 100 milliseconds. Consequently, the initial delay time T_{INI} of 15 milliseconds may be compensated by means of shortening a first source signal part, in the example comprising the source signal parts 404A, 404B and 404C.

The first target signal 402 is transmitted by the transmitter 107 over the communication network 103 to the receiving apparatus 102 for playback. During transmission it incurs a further delay caused by the algorithmic delay T_{ALG} and the signal propagation time T_{PROP}. This delay, as observed by the last transmitted target signal part 405E, cannot be reduced by the transmitting apparatus 101, but may be considered when determining a perceived quality of the conversation.

The first receiver signal 403 also comprises five receiver signal parts 406A to 406E being equal to the target signal parts 405A to 405E. Although, in the presented example, the playback of the first receiver signal 403 starts with a delay comprising the sum of the delay time T_{INI}, the algorithmic delay T_{ALG} and the signal propagation time T_{PROP} required for the signal transmission from the transmitting apparatus 101 to the receiving apparatus 102, the playback ends only with a delay comprising the algorithmic delay T_{ALG} and signal transmission time T_{PROP} and thus at the earliest possible time.

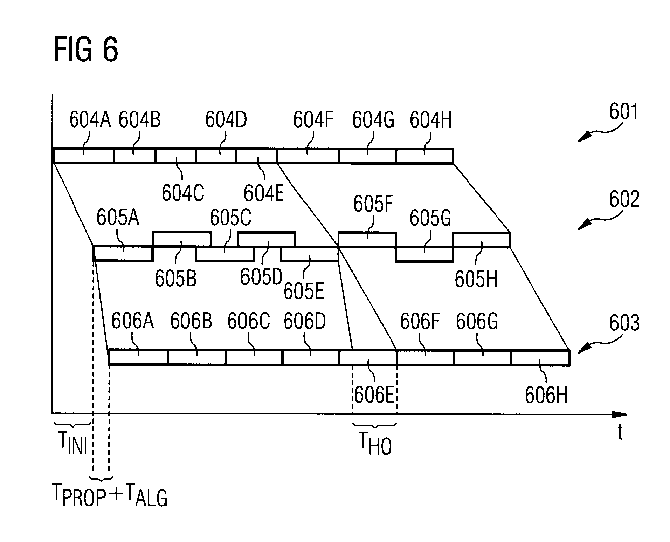

Figure 5 shows a second source signal 501, a second target signal 502 and a second receiver signal 503, which are to be processed, transmitted and received by the exemplary communication system 100 presented in Figure 1.

The second source signal 501 comprises five source signal parts 504A to 504E. These are encoded into corresponding target signal parts 505A to 505E, respectively, for transmission. In the example shown in Figure 5, the prediction means 112 of the transmitter 107 has predicted a probability of successful transmission P of the target signal part 505C which is below a predefined threshold P_{TH}, for example a probability of les than 50%. In addition, the threshold may be adapted in response to current communication requirement, for example depending on a desired quality of service or the length of an expected delay time. Such a prediction may be based on a channel model computed by the transmitter 107, which may be used, for example, to predict periodic disturbances or slowly periodic fading signals in the channel used for the communication link 119.

The channel model may be based, for example, on transmission statistics gathered by the transmitting apparatus 101, the receiving apparatus 102 or the communication network 103. The channel model may be partial or complete, i.e. cover only a partial or complete communication link 119 between the transmitting apparatus 101 and the receiving apparatus 102.

Based on the information of the channel model, in the example presented in Figure 5, it seems likely that the target signal part 505C will not be transmitted successfully to the receiving apparatus 102. In response, the scaling means 110 shortens the target signal parts 505A, 505B, 505D and 505E with respect to the corresponding source signal parts 504A, 504B, 504D and 504E, respectively. In addition, the target signal part 505C is lengthened in the time domain with respect to the corresponding source signal part 504C. In this way, the information density of the target signal part 505C, which is predicted to be lost, is lowered.

For example, the source signal part 504A, 504B, 504D and 505E may comprise source signal parts which are essential for the understanding of a speech spurt comprised in the second source signal 501. In contrast, the source signal part 504C may comprise a source signal part which is non-essential for the understanding of the speech spurt. For example, the source signal part 504C may comprise a moment of silence. Alternatively, it may be possible that the source signal part 504C comprises a source signal part already comprised in part by the preceding source signal part 504B. For example, the sound of a long vowel may stretch over the source signal parts 504B and 504C.

In the example shown in Figure 5, the target signal part 505C is indeed lost in the transmission to the receiving apparatus 102. Consequently, the second receiver signal 503 comprises only four receiver signal parts 506A, 506B, 506D and 506E corresponding to the target signal parts 505A, 505B, 505D and 505E. Instead of the target signal part 505C a concealment part 507 is included in the second receiver signal 503 between the receiver signal parts 506B and 506D. The concealment part 507 may be generated, for example, by a packet loss concealment algorithm of the receiving apparatus 102 and comprise a moment of silence, a repetition of an earlier receiver signal part 506B or a receiver signal part extrapolated from other receiver signal parts 506B and 506D. For example, it is possible to lengthen the previous and subsequent receiver signal parts 506B and 506D in the time domain in order to close the gap incurred by the loss of the target signal part 505C.

Due to the scaling of the target signal parts 505 with respect to the source signal parts 504 in the time domain all source signal parts 504A, 504B, 504D and 504E are scheduled to target signal parts 505A, 505B, 505D and 505E which are transmitted successfully to the receiving apparatus 102. Consequently, only the source signal part 504C, which, in the presented example, is non-essential for the understanding of a speech spurt comprised in the second source signal 501, may be lost in the signal transmission. Consequently, a play-out quality of the second receiver signal 503 remains good for a human listener, even in case the target signal part 505C is actually lost.

In an advantageous embodiment, the transmitting apparatus may comprise hard- or software adapted to simulate the receiver signal 503 in case the target signal part 505C is lost or not, i.e. in case the receiver signal 503 differs from the target signal 502 or not. In this case it is possible to adapt the target signal 502 by means of scaling some or all target signal parts 505 with respect to the source signal parts 504, such that the play-out quality of a speech spurt comprised in the target signal 502 is optimized for a human listener in either case. Evaluation methods like degradation measures known from psychoacoustics can be used in order to simulate and evaluate the perception quality for a human listener. Such measure are defined in the standard specification ITU-T P.862 titled "Perceptual Evaluation of Speech Quality (PESQ)". Further methods comprise adjusted PESQ (PESQa), logarithmic spectral distortion and other speech measures.

As some signal decoders 115, like AMR decoders for example, are stateful, i.e. depend on earlier receiver signal parts 506 for their proper operation, it may be desirable to omit a transmission of a target signal part 505C altogether in order to make sure that the target signal part 505C is never received by the receiving equipment 102. Alternatively a dummy frame may be transmitted, which does not alter the state of the signal decoder 115. Consequently the signal decoder 115 remains in the same state, regardless whether or not it receives the target signal part 505C. As a further alternative, it is possible to transmit state information required by the signal decoder 115 as part of a subsequent target signal part, for example as part of the target signal part 505D. By these means, the encoder can maintain full knowledge of the state of a corresponding decoder.

In the example presented in Figure 5, the target signal 502 and the receiver signal 503 have the same length as the source signal 501 although individual target signal parts 505 were scaled with respect to their corresponding source signal parts 504. In general, however, there is no such fixed relationship between these signals. In addition, some target signal parts may be identical to corresponding source signal parts, and the target signal part being scaled in time may be identical to the target signal part predicted to be lost.

For reasons of representational simplicity, the delay time T_{INI} incurred during processing of the second source signal 501 was not compensated for in the second target signal 502. Of course, in practice, both types of scaling presented in Figure 4 and 5 respectively may be applied to a single source signal by a single communication system 100.

Figure 6 shows a third source signal 601, a third target signal 602 and a third receiver signal 603, which are to be processed, transmitted and received by the exemplary communication system 100 presented in Figure 1.

In the example shown in Figure 6, a handover of the transmitting apparatus 101 from one base station to another base station needs to be performed during the transmission of the third target signal 602. This may be necessary if the transmitting apparatus 101 is moved from one cell of a mobile communication network to another. Other case resulting in the need for a handover may be the fault or change of an intermediary routing server in an IP network. Handover over result in additional delay spikes in the communication, as the transmitter has to close one communication link 119 and initialize another one. This may lead to packet losses at the receiving apparatus 102, as the first receiver signal part transmitted over the new communication link 119 arrives to late for playback.

The third source signal 601 comprises eight source signal parts 604A to 604H. After the end of the first source signal part 604A it receives a notification, for example from the communication network 103, that a handover will take place soon thereafter. In response the transmitting equipment 101 starts lengthening target signal parts 605B to 605E with respect to corresponding source signal parts 604B to 604E.

As can be seen in Figure 6, the third receiver signal 603 is longer than the third source signal 601. Because the third target signal 605B to 605E are encoded and transmitted faster as they can be played out by the receiving apparatus 102, the receiving apparatus starts buffering at least some of the corresponding receiver signal parts 606B to 606E. Thus, the receiver has enough buffered receiver signal parts 606 at the time, at which the actual hand over takes place.

The receiver sees a delay spike T_{HO} between the transmission of the fifth and sixth receiver signal part 606E and 606F. However, instead of using a packet loss concealment algorithm, the receiver can play out the buffered receiver signal parts during the delay spike T_{HO} and continue with the target signal parts 606F to 606H thereafter without creating a gap in the playback. In this way a delay spike T_{HO} caused by a handover or similar disturbance can be hidden from a users of the communication system 100.

In the examples presented in Figure 4, 5 and 6, the scaling of individual target signal parts 405, 505 and 605 was constant and predetermined, as complete knowledge of the length of the source signal 401, 501 and 506, the length of the delay time T_{INI}, the delay spike T_{HO} and other parameters was assumed. However, in practice such information may not be fully available. Thus, in an advantageous embodiment, thresholds used for time-scaling are adjusted during a speech spurt, for example in response to an estimate of an approaching end of the speech spurt or as a response to the determination of the delay time T_{INI} or delay spike T_{HO} in cases were scaling of target signal parts 405, 505 or 605 has started beforehand.

For example, it may be undesirable to lengthen the target signal part 505C, if this frame is predicted to be near the end of a speech spurt of a corresponding source signal 501. In another example, making shorter target signal parts 505D and 505E may be employed more aggressively, if a delay time T_{INI} is not removed completely near the end of a speech spurt.

In general, applying aggressive time-scaling may require a trade-off between play-out quality and conversational delay, which may be adjusted according to the ITU-T G.107 specification, titled "The E-model, a computational model for use in transmission planning".

There are several methods and algorithms known to a person skilled in the art of signal processing that can be used to scale a target signal part 405, 505 and 605 with respect to a source signal part 404, 504 or 604, respectively. For example, it is known to analyze periodic components comprised in a source signal part 404, 504, or 604. In the corresponding target signal part 405, 505 or 605 a number of repetitions of this periodic component may be removed or added in order to shorten or lengthen the target signal part 405, 505 or 605 in the time domain. Variations of this scheme are employed, for example, in the Synchronous Overlap and Add (SOLA), Pitch SOLA (PSOLA) or Waveform similarity SOLA (WSOLA) algorithms. Other algorithms like silence compression or sub-sampling can be equally applied in order to scale a target signal part 405, 505 or 605 with respect to a source signal 404, 504 or 604 in the time domain with a minimal loss of quality to the human listener.

Although the method for signal transmission, the transmitting apparatus and the communication system were mainly described using the example of speech transmission, other forms of signal transmission can be improved using adapted methods without departing from the spirit of the invention. For example, video signals transmitted over a communication system for the purpose of media streaming may be lengthened or shortened in a similar way in order to adapt the transmission to characteristics of a communication link 119 used.

For example, it is possible to change video sampling frequency used to sample a video source signal at the transmitting station. The source video signal sampled is then encoded in a target signal, for example using the same samples but with modified sampling information. This can be achieved by transmitting samples sampled at, for example, 12 Hz from the video source signal as a video target signal with a frequency of 15 Hz to a receiving apparatus, such that the video receiver signal is played back faster than the source signal was recorded. Especially in the case of video telephony, audio and video signals need to be closely synchronized, i.e. audio and video target signal parts need to be scaled in a similar fashion.

A method in accordance with the invention can be used not only at a transmitter apparatus 101 such as a mobile phone 200, but although at other devices deployed in the communication network 103. In particular at telephone exchanges and gateways between packet switching networks such as the Internet and line switching networks such as public switched telephone networks (PSTN), where delays occur due to routing or re-sampling at the network boundaries, scaling a part of a target signal with respect to a source signal can help in order to improve the quality of the signal transmission.

## Claims

1. Method for signal transmission, comprising the steps of
- providing a source signal (401, 501, 601) comprising at least a first source signal part (404A, 504A, 604B),
- generating a target signal (402, 502, 602) in dependence on the source signal (401, 501, 601), the target signal (402, 502, 602) comprising a first target signal part (405A, 505A, 605B) corresponding to the first source signal part (404A, 504A, 604B), the first target signal part (405A, 505A, 605B) being scaled with respect to the first source signal part (404A, 504A, 604B) in the time domain,
- providing a communication link (119), and
- transmitting the target signal (402, 502, 602) comprising the first target signal part (405A, 505A, 605B) over the communication link (119).

2. Method according to claim 1, wherein
the source signal (401, 501, 601) and the target signal (402, 502, 602) each comprise digital audio signals, in particular speech spurts (301, 304).

3. Method according to claim 1 or 2, wherein
the step of generating the target signal (402) comprises making shorter the first target signal part (405A).

4. Method according to claim 3, further comprising the steps of
- initializing the communication link (119),
- providing a delay time (T_{INI}), and
- performing the step of making shorter the first target signal part (405A) such that the target signal (402) is shorter than the source signal (401) by approximately the provided delay time (T_{INI}) .

5. Method according to claim 1 or 2, wherein
the step of generating the target signal (602) comprises making longer the first target signal part (605b).

6. Method according to claim 5, further comprising the steps of
- receiving a notification for a delay spike (T_{HO}), and
- performing the step of making longer the first target signal part (605B) such that the target signal (602) is longer than the source signal (601) by approximately the provided delay spike (T_{HO}).

7. Method according to any one of the claims 1 to 6, wherein the source signal (501) further comprises a second source signal part (504C) and the method further comprises the steps of
- providing a probability for a successful transmission (P) of a second target signal part (505C) comprised in a target signal (502) over the communication link (119), and
- performing the step of generating the target signal (502) such that the second target signal part (505C) of the target signal (502) corresponds to the second source signal part (504C) of the source signal (501), if the provided probability for a successful transmission (P) is below a predefined threshold (P_{TH}).

8. Method according to claim 7, wherein
the step of providing a probability for a successful transmission (P) comprises computing a channel model for the communication link (119), wherein the channel model is used to determine the probability for a successful transmission (P).

9. Method according to claim 7 or 8, wherein the step of generating the target signal (502) comprises
- making longer the second target signal part (505C) with respect to the second source signal part (504C), and
- making shorter the first target signal part (505A) with respect to the first source signal part (504A).

10. Method according to any one of the claims 7 to 9, further comprising the steps of
- simulating a receiver signal (503) received in case the transmission of the second target signal part (505C) fails, and
- performing the step of generating the target signal (502) such that an information content of the target signal (502) and the simulated receiver signal (503) differ only insignificantly, in particular that a play-out quality of a speech spurt comprised in the target signal (502) is optimized, when the receiver signal (503) is played back.

11. Method according to any one of the claims 7 to 10, further comprising the step of
- omitting the transmission of the second target signal part (505C), if the provided probability for a successful transmission (P) is below a predefined threshold (P_{TH}) .

12. Method according to any one of the claims 1 to 11, further comprising the steps of
- determining a periodic component comprised in the first source signal part (404A, 504A, 604B), and
- performing the step of generating the target signal (402, 502, 602) comprises one of repeating, removing, shortening or lengthening of the determined periodic component in order to scale the first target signal part (405A, 505A, 605B) with respect to the first source signal part (404A, 504A, 604B) in the time domain.

13. Method according to any one of the claims 1 to 12,
wherein
the step of generating the target signal (402, 502, 602) comprises performing one of the following algorithms: silence compression, sub-sampling, SOLA, PSOLA or WSOLA.

14. Method according to any one of the claims 1 to 13,
wherein
in the step of generating the target signal (402, 502, 602), a scaling parameter for scaling the first target signal part (405A, 505A, 605B) with respect to the first source signal part (404A, 504A, 604B) is adjusted during generation.

15. Transmitting apparatus (101) for use in a digital communication network (103), comprising
- a signal input (109) adapted to provide a source signal (401, 501, 601) comprising at least a first source signal part (404A, 504A, 604B),
- a scaling means (110) adapted to generate a target signal (402, 502, 602) in dependence on the source signal (401, 501, 601), the target signal (402, 502, 602) comprising a first target signal part (405A, 505A, 605B) corresponding to the first source signal part (404A, 504A, 604B), the first target signal part (405A, 505A, 605B) made shorter or longer with respect to the first source signal part (404A, 504A, 604B) in the time domain,
- a signal encoder (106) adapted to encode the target signal (402, 502, 602) comprising the first target signal part (405A, 505A, 605B) in a sequence of data frames, and
- a transmitter (107) adapted to initialize a communication link (119) to a communication network (103) and to transmit the sequence of data frames comprising the encoded target signal (402, 502, 602) using the communication link (119).

16. Transmitting apparatus (101) according to claim 15, further comprising
- a timing means (111) adapted to provide a delay time (T_{INI}) required to initialize the communication link (119),
wherein
the scaling means (110) is adapted to make shorter the first target signal part (405A) in dependence on the provided delay time (T_{INI}).

17. Transmitting apparatus (101) according to claim 15 or 16, further comprising
- a prediction means (112) adapted to predict the probability for a successful transmission (P) of a second target signal part (505C) of the target signal (502),
wherein
the scaling means (110) is adapted to make shorter or longer the first target signal part (505A) such that the second target signal part (505C) of the target signal (502) corresponds to a second source signal part (504C) comprised in the source signal (501), if the predicted probability for a successful transmission (P) of the second target signal part (505C) is below a predefined threshold (P_{TH}).

18. Communication system (100), comprising
- a transmitting apparatus (101) according to any one of the claims 15 to 17,
- a receiving apparatus (102) adapted to receive a sequence of data frames, the receiving apparatus comprising a signal decoder (115) adapted to decode a receiver signal (403, 503, 603) comprised in the sequence of data frames, and
- a digital communication network (103), adapted to connect the transmitting apparatus (101) with the receiving apparatus (102) by means of a communication link (119),
wherein
the communication system (100) is adapted to perform a method according to any one of the claims 1 to 14.

19. Communication system (100) according to claim 18, wherein the communication network (103) is a digital mobile phone communication network, in particular a GSM or UMTS network.

20. Communication system (100) according to claim 18, wherein the communication network (103) is a packet switching network, in particular a VoIP network.
